(19) **Europäisches Patentamt**
**European Patent Office**
**Office européen des brevets**

(11) **EP 4 660 213 A1**

(12) **EUROPÄISCHE PATENTANMELDUNG**

(43) Veröffentlichungstag:
**10.12.2025   Patentblatt 2025/50**

(21) Anmeldenummer: **24180441.8**

(22) Anmeldetag: **06.06.2024**

(51) Internationale Patentklassifikation (IPC):
*C08G 18/40* (2006.01)    *C08G 18/42* (2006.01)
*C08G 18/76* (2006.01)

(52) Gemeinsame Patentklassifikation (CPC):
(C-Sets verfügbar)
**C08G 18/7664; C08G 18/4018; C08G 18/4202;
C08G 18/4238;** C08G 2110/0025; C08K 3/2279;
C08K 2003/2255                              (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Covestro Deutschland AG
51373 Leverkusen (DE)**

(72) Erfinder:
• **Paven, Maxime
  40764 Langenfeld (DE)**
• **Sichelschmidt, Tim
  42113 Wuppertal (DE)**
• **Albach, Rolf
  51061 Köln (DE)**
• **Hagen, Torsten
  44229 Dortmund (DE)**

(74) Vertreter: **Levpat
c/o Covestro AG
Gebäude K12
51365 Leverkusen (DE)**

(54) **FLAMMGESCHÜTZTE POLYURETHANE**

(57)    Die vorliegende Erfindung betrifft besonders flammfeste Polyurethan- und Polyurethan/Polyisocyanurat - Hartschaumstoffe enthaltend spezielle flammhemmende Feststoffe mit hohen Dichten, ein Verfahren zu ihrer Herstellung und ihre Verwendung, insbesondere als schwer entflammbare Dämmstoffe mit niedrigen Wärmeleitfähigkeiten.

EP 4 660 213 A1

(52) Gemeinsame Patentklassifikation (CPC): (Forts.)

C-Sets
**C08K 3/22, C08L 75/04;**
**C08K 5/521, C08L 75/04**

## Beschreibung

Die vorliegende Erfindung betrifft besonders flammfeste Polyurethan- und Polyurethan/Polyisocyanurat - Hartschaumstoffe enthaltend spezielle flammhemmende Feststoffe und ein Verfahren zu ihrer Herstellung.

Polyurethane sind auf Grund ihrer vielseitigen Chemie und einstellbaren Eigenschaften in einer Vielzahl von Anwendungen zu finden, wie etwa als Polyurethan- oder Polyurethan/Polyisocyanurat - (einzeln oder gemeinsam Folgenden: PUR/PIR -) Hartschaumstoffe für Dämmanwendungen. PUR/PIR-Dämmstoffplatten zeichnen sich durch hervorragende Dämmeigenschaften bei geringer Dicke und Dichte der Platten aus, bei hoher Druckfestigkeit und einer guten Verarbeitbarkeit.

Wie alle organischen Polymere sind nicht-flammgeschützte PUR/PIR-Hartschäume brennbar. Zur Verbesserung ihrer Flammwidrigkeit oder auch von weiteren Eigenschaften wie ihrer Druckfestigkeit oder Dämmeigenschaften kann es zielführend sein, in die Polymermatrix Feststoffe einzuarbeiten.

Die meisten kommerziell erhältlichen Fest - und Füllstoffe weisen Dichten von unter 2 g / cm$^3$ auf und der Stand der Technik beschäftigt sich mit Zusammensetzungen enthaltend diese Feststoffe und daraus hergestellten Schäumen. So offenbart WO 2023/143833 A1 eine Reaktionsmischung aus mindestens einer isocyanat-reaktiven Zusammensetzung und einer Polyisocyanat-haltigen Verbindung zur Herstellung eines auf anorganischen Füllstoffen basierenden, geschlossenzelligen Polyurethan- oder Polyisocyanurat-Hartschaums, welche mindestens 70 Gew.-%, bezogen auf die Reaktionsmischung ohne physikalisches Treibmittel, einer Füllstoffzusammensetzung mit mindestens einer anorganischen Füllstoffverbindung enthält, wobei die Dichte der anorganischen Füllstoffzusammensetzung, die aus allen anorganischen Füllstoffen in der anorganischen Füllstoffzusammensetzung stammt, im Bereich von 1 bis 2 g/cm$^3$ liegt, und weiterhin dadurch gekennzeichnet, dass die Reaktionsmischung außerdem bezogen auf das Gewicht eine zugesetzte Menge an Wasser von weniger als 1,5 Teilen pro hundert in der Reaktionsmischung vorhandenen isocyanatreaktiven Verbindungen enthält. CN 108774306 A offenbart einen Polyurethanschaum-Wärmedämmstoff enthaltend 60 - 90 Teile eines anorganischen Füllstoff mit einer Dichte, die ebenfalls im Bereich von 1 bis 2 g/cm$^3$ liegt.

Die Einarbeitung von Feststoffen unterliegt allerdings Grenzen, da insbesondere die Viskosität von feststoffhaltigen Ausgangsmaterialien und auch die Fließfähigkeit der Reaktionsmischung stark beeinflusst werden. Daneben kann sich der Feststoff auch auf zahlreiche weitere Eigenschaften des PUR / PIR - Schaumproduktes auswirken.

Überraschenderweise wurde nun gefunden, dass über die Additivierung mit einer Kombination aus ausgewählten Feststoffen mit einer hohen Materialdichte und Treibmitteln mit hohen Molgewichten neue PUR/PIR-Schaumstoffe hergestellt werden können, die besonders flammwidrige Eigenschaften bei gleichzeitig guter Verarbeitbarkeit aufweisen.

Die Erfindung betrifft ein Verfahren zur Herstellung von PUR/PIR -Hartschaumstoffen, umfassend die Umsetzung eines Reaktionsgemisches enthaltend

**A1** eine Isocyanat-reaktive Komponente,

**A2** physikalisches Treibmittel,

**A3** Katalysator,

**A4** pulverförmiger Feststoff,

**A5** gegebenenfalls weitere Hilfs - und Zusatzstoffe,

**B** eine Isocyanatkomponente,

dadurch gekennzeichnet, dass

der Feststoff **A4** ausgewählt ist aus anorganischen pulverförmigen Feststoffen mit einer Dichte von > 4 g/cm$^3$ und in einer Menge von ≥ 50 und < 65 Gew.-% bezogen auf das Gesamtgewicht der Reaktionsmischung (A+B) ohne Treibmittel A2 eingesetzt wird, und

das physikalische Treibmittel **A2** ausgewählt ist aus Treibmitteln oder Treibmittelmischungen mit einem gewichtsmittleren Molekulargewicht von mehr als 90 g / mol und es in einer Menge eingesetzt wird, dass der PUR/PIR - Hartschaumstoff eine Dichte von < 40 kg / m$^3$, insbesondere < 35 kg / m$^3$ aufweist.

Die Komponenten A1 - A5 werden in dieser Anmeldung auch gemeinsam als "A - Komponenten" bezeichnet.

Die Isocyanat-reaktive Komponente **A1** enthält wenigstens eine Verbindung ausgewählt aus der Gruppe bestehend aus Polyetherpolyolen, Polyesterpolyolen, Polyetheresterpolyolen, Polycarbonatpolyolen und Polyether-Polycarbonatpolyolen.

Bevorzugt eingesetzt werden Polyole mit OH - Zahlen zwischen 10 bis 850 mg KOH/g, insbesondere 50 bis 500 mg KOH/g und besonders bevorzugt 100 bis 300 mg KOH/g auf. Insbesondere weisen die einzelnen Polyolkomponenten ein zahlenmittleres Molekulargewicht von 120 g/mol bis 6000 g/mol, insbesondere von 400 g/mol bis 2000 g/mol und besonders bevorzugt von 420 g/mol bis 600 g/mol auf.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Die Polyesterpolyole sind insbesondere Polykondensate aus Di- sowie weiterhin Tri-, und Tetraolen und Di- sowie weiterhin Tri- und Tetracarbonsäuren oder Hydroxycarbonsäuren oder Lactonen, bevorzugt werden aromatische Dicarbonsäuren oder Gemische aus aromatischen und aliphatischen Dicarbonsäuren verwendet. Unter "aromatischen Polyestern" versteht man dabei solche Polyester, zu deren Herstellung nur Polycarbonsäuren eingesetzt werden, welche einen aromatischen Anteil aufweisen. Unter "aromatisch/aliphatischen Polyestern" werden solche Polyester verstanden, zu deren Herstellung aromatische und aliphatische Polycarbonsäuren eingesetzt werden. Dies gilt analog auch für die unten beschriebenen Polyetheresterpolyole. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Es können auch Polyole genutzt werden, die Ester- und/oder Amidgruppen und /oder Carbamatgruppen aus der Chemolyse von Polyurethanen enthalten wie sie z. B. unter den Handelsnamen Repol oder Renuva erhältlich sind.

Als aromatische Polycarbonsäuren können beispielsweise Phthalsäure, Isophthalsäure, Terephthalsäure, Trimellithsäure, Trimesinsäure (1,3,5-Benzoltricarbonsäure), Pyromellithsäure und/oder Derivate der Terephthalsäure, wie beispielsweise Polyalkylenterephthalate eingesetzt werden, insbesondere Phthalsäure und /oder Terephthalsäure und ihre Isomere und Derivate.

Beispiele für aliphatische Polycarbonsäuren sind Cyclohexandicarbonsäure, Endomethylentetrahydrophthalsäure, Adipinsäure, Azelainsäure, Sebacinsäure, Glutarsäure, Maleinsäure, Fumarsäure, Itaconsäure, Korksäure, Bernsteinsäure, 2-Methylbernsteinsäure, 3,3-Diethylglutarsäure, 2,2-Dimethylbernsteinsäure, Dodekandisäure, Dimerfettsäure, Trimerfettsäure und/oder Zitronensäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Rizinolsäure, Hydroxystearinsäure und dergleichen. Geeignete Lactone sind unter anderem Caprolacton, Butyrolacton und Homologe. In einer bevorzugten Ausführungsform werden keine Hydroxycarbonsäuren und / oder deren Derivate eingesetzt.

Verwendet werden können ebenso Derivate dieser Carbonsäuren, wie beispielsweise Dimethylterephthalat, Polyethylenterephthalat, Polybutylenterephthalat, Polyethylennaphtylat oder Polyethylenfuranoat.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxylmodifizierte Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure und Ölsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren. Der anteilige Einsatz der oben genannten biobasierten Ausgangsstoffe, insbesondere von Fettsäuren bzw. Fettsäurederivaten (Ölsäure, Sojaöl etc.) kann Vorteile aufweisen, z.B. im Hinblick auf Lagerstabilität der Polyolformulierung, Dimensionsstabilität, Brandverhalten und Druckfestigkeit der Schäume.

Die Carbonsäuren können dabei sowohl einzeln als auch im Gemisch verwendet werden. Als Carbonsäuren werden bevorzugt Phthalsäureanhydrid, Terephthalsäure und/oder Isophthalsäure sowie Adipinsäure, Glutarsäure, Sebacinsäure und/oder Bernsteinsäure, und deren Mischungen verwendet.

Die Carbonsäuren werden für die Polyestersynthese mit Polyhydroxyverbindungen, insbesondere Diolen, Triolen und / oder Tetraolen umgesetzt. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere und Neopentylglykol. Vorzugsweise verwendet werden Ethylenglykol und/oder Diethylenglykol. Daneben können auch Polyhydroxyverbindungen wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind. Es können zusätzlich auch einwertige Alkanole mit verwendet werden.

Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

In einer bevorzugten Ausführungsform werden für die Herstellung der Polyesterpolyole bzw. Polyetheresterpolyole rezyklierte Ausgangsstoffe eingesetzt, beispielsweise rezykliertes Polyethylenterephthalat ("rPET"). Insbesondere kann die Komponente a1) ein Polyesterpolyol enthalten, welches aus rezykliertem Polyethylenterephthalat hergestellt ist und z. B. am Gehalt an Isophthalat erkennbar ist.

Im Weiteren werden Polyesterpolyole und Polyetheresterpolyole einzeln oder gemeinsam auch mit dem Begriff "Poly(ether)esterpolyole" bezeichnet.

Die Komponente A1 umfasst in einer besonders bevorzugten Ausführungsform mindestens 50 Gew.-% eines aromatischen und / oder eines aromatisch/aliphatischen Poly(ether)esterpolyolen, was sich positiv auf die Brandeigenschaften des Hartschaums auswirkt. Bevorzugt sind solche Poly(ether)esterpolyole mit mittleren Funktionalitäten von $\geq 1,8$ bis $\leq 2,5$, und einer Hydroxylzahl zwischen 150 bis 300 mg KOH/g, besonders bevorzugt 160 bis 270 mg KOH/g und insbesondere bevorzugt von 180 - 260 mg KOH/g.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

In einer bevorzugten Ausführungsform enthält die Komponente A1 Polyetherpolyole mit einer OH-Zahl von 10 bis 80 KOH/g und einer mittleren Funktionalität von $\geq$ 2,0 bis $\leq$ 3,0, hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO. Diese Polyole sind bevorzugt in einer Menge von 5,0 - 15 Gew.-% (insbesondere 8,0 - 12 Gew.-%) in der Komponente A1 enthalten.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Die Herstellungsverfahren der Polyole sind dem Fachmann aus der Fachliteratur bekannt.

In einer bevorzugten Ausführungsform weisen die in der Komponente A1 verwendeten Polyole mehr als 70 mol%, bevorzugt mehr als 80 mol%, insbesondere mehr als 90 mol%, primäre OH-Gruppen auf.

Weiterhin können in der Komponente A1 niedermolekulare Isocyanat-reaktive Verbindungen enthalten sein, insbesondere können di- oder trifunktionelle Amine und Alkohole, besonders bevorzugt Diole und/oder Triole mit Molmassen $M_n$ kleiner als 400 g/mol, vorzugsweise von 60 bis 300 g/mol, zum Einsatz kommen, z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente **A1,** zum Einsatz.

Neben den oben beschriebenen Polyolen und Isocyanat-reaktiven Verbindungen können in der Komponente A1 weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Die Komponente A1 kann aus einer oder mehreren der oben genannten Isocyanat-reaktiven Komponenten bestehen.

In einer ersten Ausführungsform, die eine für die Herstellung von Verbundelementen besonders geeignete Formulierung darstellt, enthält die Komponente A1 eine Polyolmischung umfassend

a1 > 20 Gew.-%, bevorzugt 45-90 Gew.-% (besonders bevorzugt 50-80 Gew.-%) eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis $\leq$ 300 mg KOH/g und einer mittleren Funktionalität von 1,8 bis 2,5, wobei mindestens 50 Gew.-% der Polyolverbindungen A1) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen,

a2) 0,0 - 3,0 Gew.-% (bevorzugt 1,0 - 2,0, insbesondere bevorzugt 1,2 - 2,0 Gew.-%) einer Polyolkomponente bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;

a3) 5,0 - 15 Gew.-% (bevorzugt 7,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funktionalität von $\geq$ 2,0 bis $\leq$ 3,0, hergestellt durch Alkoxylierung einer geeigneten Starterkomponente,

a4) 0,0 - 7,5 Gew.-% (insbesondere bevorzugt 0 - 5 Gew.-%) einer Polyolkomponente bestehend aus einem oder mehreren Polyolen ausgewählt aus Polyetherpolyolen mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid,

a5) optional weitere isocyanatreaktive Verbindungen, insbesondere niedermolekulare Verbindungen (Kettenverlängerer und / oder Vernetzer), welche nicht unter die Definition einer der Komponenten a1-a4 fallen,

wobei die Angaben in Gew.-% jeweils auf alle Komponenten der isocyanatreaktiven Zusammensetzung A1) bezogen sind.

In einer zweiten Ausführungsform, die eine für die Herstellung von Dämmplatten besonders geeignete Formulierung darstellt, enthält die Komponente A1 eine Polyolmischung umfassend

a1') 50 bis 95 Gew.-% mindestens einer Verbindung ausgewählt aus der Gruppe enthaltend Polyesterpolyolen und Polyetheresterpolyolen mit einer Hydroxylzahl im Bereich von 80 mg KOH/g bis 290 mg KOH/g, und weiterhin

a2') 5,0 - 15,0 Gew.-% wenigstens eines Polyols mit einer Hydroxylzahl im Bereich von 150 - 300 mg KOH/g, hergestellt durch Alkoxylierung von Propylenglykol oder Ethylenglykol mit Ethylenoxid (EO) und/oder Propylenoxid (PO),

wobei die Angaben in Gew.-% jeweils auf alle Komponenten der isocyanatreaktiven Zusammensetzung A1) bezogen sind.

Als physikalisches Treibmittel A2 wird mindestens eine Verbindung, ausgewählt aus der Gruppe bestehend aus physikalischen Treibmitteln mit einem Molekulargewicht von mehr als 90 g/mol, bevorzugt mehr als 120 g/mol, eingesetzt. Beispiele sind Tetrafluorethan (R134 und R134a), Pentafluorobutan (HFC-245fa), 1,1,1,2,3,3,3-Heptafluoropropan (R227ea) und halogen-substituierte Olefine, vor allem trans-Olefine mit einer Kettenlänge von C3 - C5, insbesondere mit Fluor und Chlor gemischt oder mit Fluor alleine substituiert [(hydro)fluorierte Olefine], z.B. trans-1-Chlor-3,3,3-trifluor-1-propen (HFO 1233zd(E), Solstice LBA), trans-1,1,1,4,4,4-Hexafluoro-2-buten (Opteon 1150), cis-1,1,1,4,4,4-Hexafluor-2-buten (Opteon 1100) und 1,1,1,2,3,4,5,5,5-Nonafluor-4-(trifluormethyl)pent-2-en (FA 188 von 3M) und Mischungen aus diesen Komponenten. besonders bevorzugt ist der Einsatz von trans-1-Chlor-3,3,3-trifluor-1-propen, welches kommerziell unter dem Namen "Solstice LBA" erhältlich ist, und trans-1,1,1,4,4,4-Hexafluoro-2-buten, welches unter dem Namen "Opteon 1150" erhältlich ist.

Zusätzlich können weitere physikalische Treibmittel zugesetzt werden, wenn die gemittelte Molmasse des physikalischen Treibmittels > 90 g/mol, bevorzugt > 110 g/mol bleibt.

Zur Abmischung geeignet sind beispielsweise niedrig siedende organische Verbindungen, z.B. Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente B inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und isoPentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat oder auch niedrigsiedende halogenierte Kohlenwasserstoffe. Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer besonders bevorzugten Ausführungsform beeinträchtigen die eingesetzten Treibmittel nicht die öffentliche Gesundheit und die Umwelt durch die Zerstörung von Ozon in der oberen Atmosphäre und sind daher zum Zeitpunkt der Einreichung dieser Anmeldung nach der Verordnung EG 1272/2008 nicht mit H420 gekennzeichnet.

Das physikalische Treibmittel bzw. die Mischung der physikalischen Treibmittel A2 werden in einer Menge eingesetzt, dass der PUR/PIR - Hartschaumstoff eine Dichte von < 40 kg / m$^3$, bevorzugt < 35 kg / m$^3$ aufweist.

Als Katalysatoren A3 zur Herstellung der PUR-/PIR-Hartschaumstoffe werden Verbindungen verwendet, welche die Reaktion der reaktiven Wasserstoffatome, insbesondere Hydroxylgruppen enthaltenden Verbindungen mit der Isocyanatkomponente B beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente A1 vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethylimidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysatoren A3 kommen ferner in Betracht: Amidine, wie z. B. 2,3-Dimethyl-3,4,5,6-tetrahydropyrimidin, Tetraalkylammoniumhydroxide, wie z. B. Tetramethylammonium-hydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Erfindungsgemäß enthält die Reaktionsmischung ≥ 50 und < 65 Gew.-%, insbesondere 52 - 60 Gew.- %, bezogen auf die Reaktionsmischung ohne Treibmittel A2, eines anorganischen Feststoffs A4 mit einer Dichte (20°C, 101,3 kPa) von $\geq 4\,g/cm^3$, insbesondere von $> 4{,}5\,g/cm^3$-$\leq 9\,g/cm^3$ und ganz besonders bevorzugt $> 5\,g/cm^3$-$\leq 9\,g/cm^3$. Der Feststoff ist pulverförmig, die Teilchengröße $d_{50}$ des Feststoffs beträgt bevorzugt $< 50\,\mu m$, insbesondere $< 20\,\mu m$ und ganz besonders bevorzugt $< 10\,\mu m$. Geeignete Feststoffe mit der notwendigen Dichte finden sich insbesondere unter den Übergangsmetallverbindungen wie den Oxiden (z. B. Magnetit, Hämatit, Braunstein, Titandioxid, Vanadiumtetraoxid). Sulfaten (Schwerspat), Sulfiden (z.B. Zinksulfid), Boriden (z. B. Eisenborid), Bromiden (wie z. B. Bismuthbromid), Titanaten (z. B. Bariumtitanat), Ferriten (z. B. Zinkferrit, EAF-Stäube), Vanadaten (wie Barium- und/oder Bismuthvanadat) und Polyvanadaten, Molybdaten (z. B. Bismuthmolybdat und/oder Molybdate Red PWM-1150), Polymolybdaten, und Wolframaten (z. B. Bariumwolframat) sowie Polywolframaten.

In einer bevorzugten Ausführungsform ist A4 ausgewählt ist aus einer oder mehreren Verbindungen aus der Gruppe bestehend aus Übergangsmetalloxiden, Vanadaten, Bismutvanadaten, Ferriten, Molybdaten, Boriden, Schwerspat, insbesondere Magnetit, Bismutvanadiumtetraoxid und Mischungen daraus.

In einer weiteren bevorzugten Ausführungsform ist A4 ausgewählt aus der Gruppe bestehend aus komplexen Metalloxiden der Übergangsmetalle in hohen Oxidationsstufen und spaltet weniger als 0,2 mol Wasser oder Carbonat pro Mol ab.

Die Feststoffe können auch als Nanopartikel vorliegen. Die Feststoffe können beschichtet sein, um die Wechselwirkung mit der Matrix zu optimieren. Bei der Nutzung von als Abfall anfallenden Stäuben kann eine Behandlung zur Verringerung des Gehaltes an problematischen Spurenelementen sinnvoll sein.

Weiterhin können in der isocyanat-reaktiven Komponente Hilfs- und Zusatzstoffe A5 enthalten sein. Dies sind beispielsweise oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen. In dieser Anmeldung werden zu den Hilfs- und Zusatzstoffen auch chemische Treibmittel gerechnet.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Neben der Feststoffkomponente A4 können auch noch weitere Fest- bzw. Füllstoffe A5 in geringen Mengen enthalten sein, beispielsweise die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. "Geringe Mengen" heisst dabei, dass die durchschnittliche Dichte aller Feststoffe (A4 und aus A5) in der Formulierung $\geq 4$ g / cm$^3$, insbesondere von > 4,5 g / cm$^3$- $\leq 9$ g / cm$^3$, ganz besonders bevorzugt > 5 g / cm$^3$- $\leq 9$ g / cm$^3$ bleibt. Weitere geeignete anorganische Fest - bzw. Füllstoffe sind silikatische Mineralien, beispielsweise Schichtsilikate wie z. B. Antigorit, Serpentin, Hornblenden, Amphibole, Chrisotil, Montmorillonit und Talkum, Metalloxide, wie Kaolin und Aluminiumoxide, Metallsalze, wie Kreide, und anorganische Pigmente sowie Glas u.a. sowie natürliche und synthetische faserförmige Mineralien wie Wollastonit, Metall- Carbon und insbesondere Glasfasern verschiedener Länge, die gegebenenfalls geschlichtet sein können. Auch Ammoniumpolyphosphate, roter Phosphor und expandierbarer Graphit können geeignet sein. Als organische Füllstoffe kommen beispielsweise in Betracht: Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

A5 umfasst bevorzugt auch Flammschutzmittel, insbesondere solche auf Phosphor-Basis, wie beispielsweise Phospholinoxide, Phosphinate, Phosphonate, Phosphazene, oder Phosphate, wie z. B. Diethylethylphosphonat (DEEP), Triethylphosphat (TEP), Triarylphosphate wie Triphenylphosphat (TPP), Trikresylphosphat, Diphenylkresylphosphat (DPK), Bisphenol-A-bis(diphenylphosphat) (BDP), Resorcinyldiphosphat (RDP) und tert-Butylphenyldiphenylphosphat, sowie chlorierte Phosphate wie Tris(2-chlorethyl)phosphat, Tris-(2-chlorpropyl)phosphat (TCPP), Tris(1,3-dichlorpropyl) phosphat, Tris-(2,3-dibrompropyl)phosphat, Tetrakis-(2-chlorethyl)-ethylendiphosphat, sowie handelsübliche halogenhaltige Flammschutzpolyole.

Weitere grundsätzlich geeignete Flammschutzmittel A5 sind beispielsweise bromierte Ester, bromierte Ether (Ixol) oder bromierte Alkohole wie Dibromneopentylakohol, Tribromneopentylalkohol, Tetrabromphthalat Diol.

Zu den geeigneten Phosphazenen gehören Hexaphenoxycyclophosphazen und seine Derivate wie z. B. Trimethoxytriphenoxy-phosphazen, Kresylphenoxyphosphazene.

Zu den geeigneten Phosphonaten gehören Diethanolaminomethylphosphonsäuredialkylester, Dimethylpropylphosphonat (DMPP), Diethylethylphosphonat (DEEP), Diethylhydroxymethylphosphonat, Dibutylhydroxymethylphosphonat, Diethanolaminomethylphosphonsäurediethylester, die Methyl- und Ethylester der P,P'-(4-morpholinylmethylene)bisphosphonsäure,

Zu den Phosphinaten gehören 9,10-Dihydro-9-oxa-10-phosphorylphenanthrene-10-oxid (DOPO) und seine Addukte an alpha-ungesättigte Carbonsäuren, wässrige Lösungen von Natriumphosphinat und Natriumdiethylphosphinat sowie flüssige Dialkylhypophosphorige Ester.

Phosphinoxide, die geeignet sein können, sind Tris(hydroxymethyl)phosphinoxid, Isobutyl-bis(hydroxymethyl) phosphinoxid, Isobutyl-bis(3-hydroxypropyl)phosphinoxid,

In einer bevorzugten Ausführungsform weist mindestens eines der eingesetzten Flammschutzmittel einen Schmelzpunkt unterhalb 21,5 °C auf.

Bevorzugt eingesetzt werden Triethylphosphat, Tris-(2-chlorpropyl)phosphat und Mischungen daraus mit Hydroxymethylphosphonaten, insbesondere Triethylphosphat, und seine Mischungen mit Hydroxymethylphosphonaten.

In einer weiteren bevorzugten Ausführungsform werden keine halogenhaltigen Flammschutzmittel und / oder keine Triarylphosphate eingesetzt.

Bevorzugt werden keine Flammschutzmittel eingesetzt, die zum Zeitpunkt dieser Anmeldung nach der Verordnung EG 1272/2008 mit den Gefährdungssätzen H340, H350, H360, H400 oder H410 klassifiziert sind.

Zu A5 können auch chemische Treibmittel gehören. Bei den eingesetzten chemischen Treibmitteln handelt es sich bevorzugt um Wasser, Carbonsäuren und deren Gemische. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Malonsäure, Oxalsäure und Ricinolsäure, eingesetzt. Auch Ammoniumsalze der Dialkylcarbaminsäure, die mit Isocyanat zu Dialkylharnstoffen und $CO_2$ reagieren, können geeignet eingesetzt werden. Es wird bevorzugt kein chemisches Treibmittel zugesetzt, bis auf die in den Ausgangsstoffen vorhandene Restfeuchte. Wird chemisches Treibmittel zugesetzt, wird besonders bevorzugt Wasser, insbesondere in einer Menge von bis zu 0,3 Gew.-% bezogen auf das Gewicht von A1, eingesetzt.

Als geeignete Isocyanatkomponente B kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl) benzol (XDI), sowie Alkyl-2,6-diisocyanatohexanoate (Lysindiisocyanate) mit C1- bis C6-Alkylgruppen. Bevorzugt wird die Isocyanatkomponente B ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente B eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten A1 beschriebenen Polyolen.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$Kennzahl = (Mole\ Isocyanat\text{-}Gruppen\ /\ Mole\ Isocyanat\text{-}reaktive\ Gruppen) * 100$$

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 90 bis 600 führen. Diese Kennzahl liegt bevorzugt in einem Bereich von 180 bis 450, bevorzugt zwischen 250 bis 400 und besonders bevorzugt in einem Bereich von 300 bis 400, in dem ein hoher Anteil an Polyisocyanuraten (PIR) vorliegt (der Hartschaum wird als PIR-Schaum oder PUR-/PIR-Schaum bezeichnet) und zu einer höheren Flammwidrigkeit des PUR-/PIR-Schaums selbst führt. Ein anderer bevorzugter Bereich für die Isocyanat-Kennzahl ist der Wertebereich von > 90 bis < 150 (der Hartschaum als Polyurethanschaum (PUR-Schaum) bezeichnet) in dem der Schaum zum Beispiel zu geringerer Sprödigkeit neigt.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25°C.

In einer bevorzugten Ausführungsform enthält die Reaktionsmischung außer den Komponenten A1, A2, A3, A4, A5 und B keine weiteren Bestandteile. In besonderen Ausführungsformen umfasst eine Komponente oder umfassen einige der Komponenten oder, besonders bevorzugt, umfassen alle Komponenten jeweils nur die hierin als bevorzugt oder besonders bevorzugt angegebenen Verbindungen, und dies vor allem in den hierin als bevorzugt angegebenen Konzentrationsbereichen.

Die Erfindung betrifft ebenfalls einen PUR-/PIR-Hartschaum der durch das erfindungsgemäße Verfahren hergestellt ist.

Die Herstellung der erfindungsgemäßen PUR-/PIR-Hartschaumstoffe erfolgt nach dem Fachmann bekannten Einstufenverfahren, bei dem die Reaktionskomponenten kontinuierlich oder diskontinuierlich miteinander zur Reaktion gebracht werden. Die Vermischung der Ausgangskomponenten kann hierfür in dem Fachmann üblichen Mischaggregaten erfolgen. Im allgemeinen werden alle A - Komponenten zuerst möglichst homogen, beispielsweise in einem Rührkessel, miteinander vermischt. Es ist aber auch möglich, Treibmittel, Feststoffe und / oder Katalysatoren erst kurz vor der Reaktion einzumischen.

Die Vermischung mit der Isocyanat-Komponente B erfolgt dann manuell oder durch Zuhilfenahme maschineller Einrichtungen im Hochdruck- oder Niederdruckverfahren, beispielsweise in einem (Hochdruck)Mischkopf, und anschließendem Austrag auf ein Transportband oder in geeignete Formen, wo die Mischung zur Aushärtung gebracht wird. Es ist ebenfalls möglich, dass die Vermischung von Isocyanat - reaktiver Komponente B und den Komponenten A1 - A5 ganz oder teilweise in einem Extruder stattfindet und die Mischung anschließend ausgetragen wird.

Die erfindungsgemäßen PUR/PIR - Hartschaumstoffe weisen eine Dichte von < 40 kg / m$^3$, insbesondere < 35 kg / m$^3$ auf. In der Regel wird dafür eine Menge von 0,75 - 1,5 mol, insbesondere von 0,8 - 1,1 mol Treibmittel (Summe aus physikalischen Treibmitteln A2 und chemischen Treibmitteln A5) bezogen auf 1 kg (A+B) benötigt (A+B = Summe der Gewichte aller A - Komponenten und der B - Komponente = Gesamtgewicht der Reaktionsmischung).

Die Dichtewerte für die PUR/PIR - Hartschäume beziehen sich auf die Dichte unter Normalbedingungen (23°C, 101,3 kPa, 50 +/- 10 % rel. Luftfeuchte).

Die A - Komponenten ohne physikalisches Treibmittel A2 und ohne die Feststoffe aus A4 und A5 sowie die B - Komponente werden bevorzugt so gewählt, dass sie nach Reaktion zu einer elastomeren Knotendichte der Polymermatrix von > 1 mol/kg, bevorzugt im Bereich von 2 - 6 mol/kg führen. Die daraus resultierenden erfindungsgemäßen Hartschäume sind überwiegend geschlossenzellig (Offenzelligkeit von < 50 %, bevorzugt < 40 %).

Die erfindungsgemäß hergestellten Hartschaumstoffe weisen eine für Polyurethanschäume ausgezeichnete Flammwidrigkeit auf, insbesondere weisen sie nach einer Veraschung bei 750 °C für 30 Minuten einen Massenverlust von weniger als 50 Gew.-% auf. Die erfindungsgemäßen Hartschäume sind insbesondere geschlossenzellig (Offenzelligkeit von < 50%, insbesondere < 40%) und haben eine geringe Wärmeleitfähigkeit (gemessen als lambda-Wert von < 100, bevorzugt < 50 mW/mK).

Die Hartschaumstoffe finden daher bevorzugt zur Herstellung von Dämmstoffen in Form von Blockschäumen und Verbundelementen Verwendung. Bei Verbundelementen findet die Verschäumung üblicherweise in kontinuierlicher oder diskontinuierlicher Weise gegen mindestens eine Deckschicht statt.

Ein weiterer Gegenstand der Erfindung ist demzufolge die Verwendung eines erfindungsgemäßen PUR-/PIR-Hartschaumstoffes als Isolationsschaumstoff in Form eines Blockschaums und/oder als Kernschicht oder Haftvermittler in Verbundelementen, wobei die Verbundelemente eine einen erfindungsgemäßen PUR-/PIR-Hartschaumstoff umfassende Schicht und eine Deckschicht umfassen.

Die Deckschicht wird hierbei zumindest teilweise von einer den erfindungsgemäßen PUR-/PIR-Hartschaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln. Die Herstellung von Blockschäumen und Dämmplatten erfolgt ebenfalls nach dem Fachmann bekannter Art in kontinuierlicher oder diskontinuierlicher Weise.

**Die Erfindung soll anhand der folgenden Beispiele näher beschrieben werden:**

**Herstellung der PUR/PIR-Hartschäume**

**Polyole A1**

**A1-1** (Hoopol F-1394-A, Polyesterpolyol auf Basis von Terephthalsäure, Synthesia)
**A1-2** (Desmophen 4070X, Phthalsäure basierter Polyester, Covestro)
**A1-3** (Desmophen L 2830, bifunktionelles Polyetherpolyol, Covestro)

**Treibmittel A2**

**A2-1** Soltice LBA, trans-1-Chlor-3,3,3-trifluorpropen, Molekulargewicht 131 g/mol, Honeywell Specialty Chemical
**A2-2** n-Pentan, Molekulargewicht 72 g/mol, Sigma-Aldrich

**Katalysatoren A3**

**A3-1** (Desmorapid DB, Benzyldimethylamine, Arcos Organics)
**A3-2** (Dabco K-15 Katalysator, Kalium-2-ethylhexanoat in 2,2'-Oxydiethanol, Air Products)

**Feststoffe A4**

**A4-1** (MagniF, Eisenoxid Magnetit, Dichte p*= 5,1 g/cm$^3$, LKAB Minerals)
**A4-2** (Bismutvanadiumtetraoxid, Dichte p*= 6,1 g/cm$^3$, ChemScene)
**A4-3** (Schwerspat CH1177, Sachtleben Minerals, Dichte p*= 4,4 g/cm$^3$)
**A4-4** (Talkum EX GT 10, Quarzwerke Group, Dichte p*= 2,8 g/cm$^3$)

**Additive A5**

**Flammschutzmittel**

**A5-1** (Tris(2-chloro-1-methylethyl)phosphat, TCPP, Lanxess)
**A5-2** (Triethylphosphat, TEP, Lanxess)

**Stabilisator**

**A5-3** (Tegostab B8443, Evonik Industries)

**Isocyanat B**

**B-1** polymeres Isocyanat (Desmodur 44V20L, NCO 31,4%, 160-240 mPas bei 25 °C, Covestro)

**Allgemeine Herstellung der PUR/PIR Schäume**

Für die Herstellung der PUR/PIR-Schäume wurden entsprechend der Angaben in den folgenden Tabellen die Komponenten **A1** - **A4** mit einem Pendraulikrührer bei 2000 U/min vermischt. Anschließend wurde der benötigte Anteil an Feststoff F zur Polyolmischung gegeben und mit Hilfe des Pendraulikrührers eingearbeitet. Als nächstes erfolgte die Zugabe des Treibmittels A5 und die Mischung wurde gründlich bei 2000 U/min homogenisiert.

Als letztes wurde das Isocyanat **B** zugegeben, für einige Sekunden gerührt und die Mischung in eine offene, mit Löschpapier ausgekleidete Form zum Schäumen gegossen. Während des Schäumvorgangs wurden die Startzeit und Abbindezeit des Schaumes notiert. Die Startzeit entspricht dem Zeitpunkt, an dem die Mischung cremig wurde und anfing zu expandieren. Die Abbindezeit entspricht der Zeit vom Beginn der Vermischung bis zum Zeitpunkt, an dem aus dem aufsteigenden Reaktionsgemisch durch Eintauchen eines Stabes Fäden gezogen werden können. Nach der vollständigen Expansion des Schaums wurde dieser aus der Form entnommen und für 24 h bei Raumtemperatur gelagert. Abschließend wurden die Ränder des Schaumes entfernt und Probekörper ausgeschnitten.

Die Rohdichte und Offenzelligkeit der ausgehärteten Schäume wurde nach DIN EN ISO 845 (Oktober 2009) bzw. mit einem Accupyk-1330 nach DIN EN ISO 4590 (August 2003) bestimmt. Die Messung erfolgt unter Normalbedingungen (23°C, 101,3 kPa, 50 +/- 10 % rel. Luftfeuchte).

Die Druckspannung bei 10% Stauchung wurde mit einer Startlast von 10N nach DIN EN 826 an 50x50x50 mm3 großen Prüfkörpern bestimmt.

Die Messung der Wärmeleitzahl erfolgte nach DIN 52616 (November 1977) an einem Fox 200 bei 23 °C, 50% rel. Feuchte und einer Mitteltemperatur von 10 °C.

Die Brandprüfung erfolgte entsprechend DIN EN ISO 1182:2010 - Nichtbrennbarkeitsprüfung. Der Test ist bestanden, wenn der Massenverlust höchstens 50 Gew.-% beträgt, die Dauer der anhaltenden Entflammung höchstens 20 s und die Temperaturerhöhung höchstens 50 °C beträgt.

Alle Werte in Gew.-% in den Tabellen beziehen sich auf die Gesamtzusammensetzung (= 100 Gew.-%). Alle nicht erfindungsgemäßen Versuche sind mit einem * markiert.

Tabelle 1: Formulierungen mit unterschiedlichen Feststoffen und - gehalten

| Beispiel | | | 1* | 2 | 3 | 4 | 5 | 6* |
|---|---|---|---|---|---|---|---|---|
| **A-Komponenten** | | | | | | | | |
| A1-1 | OHZ* 240 | Gew.-T. | 87,5 | 87,5 | 63,0 | 63,0 | 63,0 | 63,0 |
| A1-2 | OHZ 370 | Gew.-T. | 2,0 | 2,0 | 4,0 | 4,0 | 4,0 | 4,0 |
| A1-3 | OHZ 28 | Gew.-T. | | | 10,0 | 10,0 | 10,0 | 10,0 |
| A5-1 | OHZ 0 | Gew.-T. | 15,0 | 15,0 | 20,0 | 20,0 | 20,0 | 20,0 |
| A5-2 | OHZ 0 | Gew.-T. | 20,0 | 20,0 | | | | |
| A5-3 | OHZ 13 | Gew.-T. | 5,0 | 5,0 | 3,0 | 3,0 | 3,0 | 3,0 |
| A3-1 | OHZ 0 | Gew.-T. | 0,8 | 1,5 | 3,6 | 3,6 | 1,2 | 1,2 |
| A3-2 | OHZ 468 | Gew.-T. | 2,5 | 5,5 | 12,6 | 12,6 | 8,4 | 8,4 |
| A2-1 | OHZ 0 | Gew.-T. | 41,9 | 141,0 | 135,8 | 135,8 | 125,5 | 125,3 |

(fortgesetzt)

| Beispiel | | | 1* | 2 | 3 | 4 | 5 | 6* |
|---|---|---|---|---|---|---|---|---|
| **A-Komponenten** | | | | | | | | |
| A4-1 | $\rho$*= 5,1 | Gew.-T. / % | | 371,2 / 55 | 357,2 / 55 | 227,3 / 35 | | |
| A4-2 | $\rho$*= 6,1 | Gew.-T. / % | | | | 129,9 / 20 | | |
| A4-3 | $\rho$*= 4,4 | Gew.-T. / % | | | | | 330,2 / 55 | |
| A4-4 | $\rho$*= 2,8 | Gew.-T. / % | | | | | | 330,2 / 55 |
| **B-Komponente** | | | | | | | | |
| B-1 | | Gew.-T. | 161,1 | 167,2 | 176 | 176 | 176 | 160,6 |
| Index | (100 NCO/OH) | | 305 | 300 | 330 | 330 | 330 | 330 |
| **Eigenschaften** | | | | | | | | |
| Erscheinungsbild | | | i.O. | i.O. | i.O. | i.O. | i.O. | n.a.[1] |
| Startzeit | | s | 24 | 23 | 12 | 15 | 16 | |
| Abbindezeit | | s | 226 | 354 | 40 | 50 | 70 | |
| Dichte | | kg/m$^3$ | 34 | 29 | 28 | 28 | 25 | |
| Offenzelligkeit | | % | 28 | 37 | 25 | 25 | 28 | |
| Druckfestigkeit | | kPa | 52 | 22 | 35 | 48 | 49 | |
| Wärmeleitzahl | | mW/mK | 24 | 38 | 26 | | | |
| **ISO 1182 Brandprüfung** | | | | | | | | |
| Massenverlust | | Gew.-%[1] | 98 | 46 | 44 | 49 | 49 | |
| Flammdauer | | s | 26 | 20 | 10 | 17 | 13 | |
| Temperaturerhöhung | | °C | 71 | 44 | 40 | 35 | 46 | |
| [1] Volumen des Feststoffes ist zu groß, um in dem Polyol dispergiert zu werden | | | | | | | | |

Tabelle 2: Rolle der Menge des Feststoffgehaltes auf den Massenverlust des Schaumes in der Brandprüfung DIN EN ISO 1182

| Beispiel | | | 7* | 8* | 9* | 10* | 11* |
|---|---|---|---|---|---|---|---|
| A1-1 | OHZ* 240 | Gew.-T. | 87,5 | 87,5 | 87,5 | 63,0 | 63,0 |
| A1-2 | OHZ 370 | Gew.-T. | 2,0 | 2,0 | 2,0 | 4,0 | 4,0 |
| A1-3 | | | | | | 10,0 | 10,0 |
| A5-1 | OHZ 0 | Gew.-T. | 15,0 | 15,0 | 15,0 | 20,0 | 20,0 |
| A5-2 | OHZ 0 | Gew.-T. | 20,0 | 20,0 | 20,0 | | |
| A5-3 | OHZ 13 | Gew.-T. | 5,0 | 5,0 | 5,0 | 3,0 | 3,0 |
| A3-1 | OHZ 0 | Gew.-T. | 1,5 | 1,5 | 1,5 | 1,2 | 1,2 |
| A3-2 | OHZ 286 | Gew.-T. | 5,5 | 5,5 | 5,5 | 4,2 | 4,2 |
| A2-1 | OHZ 0 | Gew.-T. | 42,4 | 52,6 | 55,6 | 180,6 | 180,6 |
| A4-1 | $\rho$*= 5,1 | Gew.-T./ % | 291,7/49 | 419,4/58 | 455,5 / 60 | 465,2 / 65 | 584,5 / 70 |
| B-1 | | Gew.-T. | 167,2 | 167,2 | 167,2 | 145,1 | 145,1 |
| Index | (100 NCO/OH) | | 300 | 300 | 300 | 330 | 330 |
| Startzeit | s | | 12 | 13 | 21 | 43 | 60 |
| Abbindezeit | s | | 42 | 58 | 101 | 260 | 180 |

(fortgesetzt)

| Beispiel | | | 7* | 8* | 9* | 10* | 11* |
|---|---|---|---|---|---|---|---|
| Dichte | | kg/m³ | 64 | 65 | 68 | n.a.[1] | n.a.[1] |
| Offenzelligkeit | | % | 10 | 10 | 15 | | |
| Druckfestigkeit | | kPa | 218 | 184 | 100 | | |
| Wärmeleitzahl | | mW/mK | 28 | 29 | 29 | | |
| **ISO 1182 Brandprüfung** | | | | | | | |
| Massenverlust | | Gew.-%. | 53 | 43 | 39 | n.d. | n.d |
| Flammdauer | | s | 66 | 65 | 71 | n.d | n.d |
| Temperaturerhöhung | | °C | 81 | 89 | 91 | n.d | n.d |
| [1] Schaum weist erhebliche Störungen auf und ist bröselig | | | | | | | |

Die Versuche 2 - 5 und 8* - 9* zeigen, dass Schäume mit einem Gehalt von ≥ 50,0 und < 65,0 Gew.-% an Feststoff mit einer Dichte p*= 5,1 einen Massenverlust von < 50 Gew.-% im ISO 1182 Brandversuch aufweisen.

Bei einem niedrigeren Feststoffgehalt ist der Massenverlust zu groß (Beispiel 7*), Formulierungen mit höheren Mengen an Feststoff (Beispiel 10* und 11*) lassen sich nicht mehr zu akzeptablen Schäumen verarbeiten.

Tabelle 3: Rolle der Schaumdichte auf die Temperaturerhöhung und Dauer der anhaltenden Entflammung in der Brandprüfung DIN EN ISO 1182

| Beispiel | | | 2 | 12* | 13* | 14* |
|---|---|---|---|---|---|---|
| A1-1 | OHZ* 240 | Gew.-T. | 87,5 | 87,5 | 87,5 | 87,5 |
| A1-2 | OHZ 370 | Gew.-T. | 2,0 | 2,0 | 2,0 | 2,0 |
| A5-1 | OHZ 0 | Gew.-T. | 15,0 | 15,0 | 15,0 | 15,0 |
| A5-2 | OHZ 0 | Gew.-T. | 20,0 | 20,0 | 20,0 | 20,0 |
| A5-3 | OHZ 13 | Gew.-T. | 5,0 | 5,0 | 5,0 | 5,0 |
| A3-1 | OHZ 0 | Gew.-T. | 1,5 | 1,5 | 1,5 | 1,5 |
| A3-2 | OHZ 286 | Gew.-T. | 5,5 | 5,5 | 5,5 | 5,5 |
| A2-1 | OHZ 0 | Gew.-T. | 141,0 | 63,9 | 48,8 | 39,3 |
| A4-1 | $\rho$*= 5,1 | Gew.-T./%[1] | 371,2 / 55 | 371,2 / 55 | 371,2/55 | 371,2/55 |
| B-1 | | Gew.-T. | 167,2 | 167,2 | 167,2 | 167,2 |
| Index | (100 NCO/OH) | | 300 | 300 | 300 | 300 |
| Startzeit | | s | 23 | 12 | 13 | 21 |
| Abbindezeit | | s | 354 | 42 | 58 | 101 |
| Dichte | | kg/m³ | 29 | 53 | 65 | 77 |
| Offenzelligkeit | | % | 37 | 14 | 10 | 10 |
| Druckfestigkeit | | kPa | 22 | 104 | 184 | 254 |
| Wärmeleitzahl | | mW/mK | 38 | 27 | 29 | 28 |
| **ISO 1182 Brandprüfung** | | | | | | |
| Massenverlust | | Gew.-%. | 46 | 45 | 51 | 49 |
| Flammdauer | | s | 20 | 50 | 69 | 83 |
| Temperaturerhöhung | | °C | 44 | 71 | 79 | 97 |
| [1] Gewichtsprozent bezogen auf die gesamte Zusammensetzung | | | | | | |

Nur der Schaum mit einer niedrigen Rohdichte (Beispiel 2) zeigt im Brandversuch nicht nur geringen Massenverlust, sondern auch eine überraschend niedrige Flammdauer und geringe Temperaturerhöhung.

Tabelle 4: Rolle des Feststoffgehalts bzw. des Treibmittels auf die Schaumeigenschaften bei gleichen berechneten Dichten

| **Beispiel** | | | 15 | 16* | 17* | 18* |
|---|---|---|---|---|---|---|
| A1-1 | OHZ* 240 | Gew.-T. | 63,0 | 63,0 | 63,0 | 63,0 |
| A1-2 | OHZ 370 | Gew.-T. | 4,0 | 4,0 | 4,0 | 4,0 |
| A1-3 | OHZ 370 | Gew.-T. | 10,0 | 10,0 | 10,0 | 10,0 |
| A5-1 | OHZ 0 | Gew.-T. | 20,0 | 20,0 | 20,0 | 20,0 |
| A5-3 | OHZ 13 | Gew.-T. | 3,0 | 3,0 | 3,0 | 3,0 |
| A3-1 | OHZ 0 | Gew.-T. | 1,2 | 1,2 | 1,2 | 1,2 |
| A3-2 | OHZ 286 | Gew.-T. | 4,2 | 4,2 | 4,2 | 8,4 |
| A2-1 | OHZ 0 | Gew.-T. | 116,7 | 153,2 | 180,6 | |
| A2-2 | OHZ 0 | Gew.-T. | | | | 69,5 |
| A4-1 | $\rho$*= 5,1 | Gew.-T. / % | 306,2 / 55 | 465,2/65 | 584,5 / 70 | 330,2 / 55 |
| B-1 | | Gew.-T. / % | 145,1 | 145,1 | 145,1 | 160,6 |
| Index | (100 NCO/OH) | | 330,0 | 330,0 | 330,0 | 330,0 |
| **Eigenschaften** | | | | | | |
| Erscheinungsbild | | | + | - | - | - |
| Startzeit | s | | 30 | 43 | 60 | 16 |
| Abbindezeit | s | | 75 | 260 | 180 | 80 |
| Dichte (berechnet) | | kg/m$^3$ | 23 | 23 | 23 | 23 |
| Dichte (gemessen) | | kg/m$^3$ | 28 | n.a. | n.a. | n.a. |
| Legende Erscheinungsbild: + in Ordnung - Schaum spröde und grobzellig -- Schaum sehr spröde und sehr grobzellig --- schlechte Vermischung von Treibmittel und Reaktionsmischung. Niedrige Steighöhe und hohe Schaumsprödigkeit | | | | | | |

Das in Beispiel 18* eingesetzte Treibmittel n-Pentan lässt sich mit der hoch feststoffhaltigen Reaktionsmischung nicht gut vermischen, die Mischung schäumt nur niedrig und der entstehende Schaum ist spröde. Der Gehalt von 65 und 70 Gew.-% Feststoff in den Versuchen 16* und 17* führt ebenfalls zu spröden Schäumen.

Nur mit der Reaktionsmischung aus Beispiel 14, enthaltend das nicht-brennbare Treibmittel Solstice LBA, welches ein Molgewicht von mehr als 90 g/mol aufweist, kann ein qualitativ geeigneter Schaum dargestellt werden.

**Patentansprüche**

1. Verfahren zur Herstellung von PUR/PIR -Hartschaumstoffen umfassend die Umsetzung eines Reaktionsgemisches enthaltend

> **A1** eine Isocyanat-reaktive Komponente,
> **A2** physikalisches Treibmittel,
> **A3** Katalysator,
> **A4** pulverförmiger Feststoff,
> **A5** gegebenenfalls weitere Hilfs - und Zusatzstoffe,
> **B eine** Isocyanatkomponente,
> **dadurch gekennzeichnet, dass**

der Feststoff **A4** ausgewählt ist aus anorganischen pulverförmigen Feststoffen mit einer Dichte von > 4 g/cm$^3$ (20°C, 101,3 kPa) und in einer Menge von $\geq$ 50 und < 65 Gew.-% bezogen auf das Gesamtgewicht der Reaktionsmischung (A+B) ohne Treibmittel A2 eingesetzt wird,
und

das Treibmittel **A2** ausgewählt ist aus Treibmitteln oder Treibmittelmischungen mit einem gewichtsmittleren Molekulargewicht von mehr als 90 g / mol, insbesondere von mehr als 110 g/mol, und es in einer Menge eingesetzt wird, dass der PUR/PIR - Hartschaumstoff eine Dichte (23°C) von < 40 kg / m$^3$ (DIN EN ISO 845 (Oktober 2009)) aufweist.

2.  Verfahren gemäß Anspruch 1, **dadurch gekennzeichnet, dass** A5 ein Flammschutzmittel enthält, welches einen Schmelzpunkt unterhalb 21,5 °C aufweist.

3.  Verfahren gemäß Anspruch 2, **dadurch gekennzeichnet, dass** A5 Triethylphosphat, Tris-(2-chlorpropyl)phosphat und Mischungen daraus mit Hydroxymethylphosphonaten, insbesondere Triethylphosphat oder Mischungen aus Triethylphosphat mit Hydroxymethylphosphonaten enthält.

4.  Verfahren gemäß Anspruch 1, 2 oder 3, **dadurch gekennzeichnet, dass** die Reaktion der A - Komponenten (ohne physikalisches Treibmittel A2 und Feststoffe aus A4 und A5) und der B - Komponente zu einer elastomeren Knotendichte der Polymermatrix von > 1 mol/kg, bevorzugt von 2 - 6 mol/kg, führt.

5.  Verfahren gemäß einem der Ansprüche 1 bis 5, **dadurch gekennzeichnet, dass** das Treibmittel A2 halogen-substituierte trans-Olefine mit einer Kettenlänge von C3 - C5 enthält, insbesondere trans-1-Chlor-3,3,3-trifluor-1-propen und / oder trans-1,1,1,4,4,4-Hexafluoro-2-buten (Opteon 1150).

6.  Verfahren gemäß einem der Ansprüche 1 bis 5, **dadurch gekennzeichnet, dass** das Reaktionsgemisch 0,75 - 1,5 mol, insbesondere 0,8 - 1,1 mol Treibmittel (Summe aus physikalischen Treibmitteln A2 und chemischen Treibmitteln) bezogen auf 1 kg (A+B) enthält.

7.  Verfahren gemäß einem der Ansprüche 1 bis 6, **dadurch gekennzeichnet, dass** A4 ausgewählt ist aus der Gruppe bestehend aus Übergangsmetalloxiden, Vanadaten, Bismutvanadaten, Ferriten, Molybdaten, Boriden, Schwerspat und Mischungen daraus, insbesondere Magnetit, Bismutvanadiumtetraoxid und Mischungen daraus.

8.  Verfahren gemäß Anspruch 7, **dadurch gekennzeichnet, dass** die isocyanat-reaktive Komponente A1 eine Polyolmischung mit einer mittleren Hydroxylzahl zwischen 10 bis 850 KOH/g, insbesondere 50 bis 500 mg KOH/g und besonders bevorzugt 100 bis 300 mg KOH/g aufweist.

9.  Verfahren gemäß Anspruch 1-8, **dadurch gekennzeichnet, dass** die Komponente A1 die Komponenten

a1) > 20 Gew.-%, bevorzugt 45-90 Gew.-% (besonders bevorzugt 50-80 Gew.-%) eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis $\leq$ 300 mg KOH/g und einer mittleren Funktionalität von 1,8 bis 2,5, wobei mindestens 50 Gew.-% der Polyolverbindungen a1) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen;
a2) 0,0 - 3,0 Gew.-% (bevorzugt 1,0 - 2,0, insbesondere bevorzugt 1,2 - 2,0 Gew.-%) einer Polyolkomponente bestehend aus einem oder mehreren Polyolen ausgewählt aus Polyesterpolyolen mit einer OH-Zahl im Bereich von 600 - 900 mg KOH/g, insbesondere von 750 - 850 mg KOH/g;
a3) 5,0 - 15 Gew.-% (bevorzugt 7,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funk-tionalität von $\geq$ 2,0 bis $\leq$ 3,0, hergestellt durch Alkoxylierung einer geeigneten Starterkomponente;
a4) 0,0 - 7,5 Gew.-% (insbesondere bevorzugt 0 - 5 Gew.-%) einer Polyolkomponente bestehend aus einem oder mehreren Polyolen ausgewählt aus Polyetherpolyolen mit einer OH-Zahl im Bereich von 350 -500 mg KOH/g, insbesondere von 390 - 440 mg KOH/g, hergestellt durch Alkoxylierung eines aromatischen Amins mit mindestens einem Alkylenoxid; und
a5) optional weitere isocyanatreaktive Verbindungen, insbesondere niedermolekulare Verbindungen (Kettenverlängerer und / oder Vernetzer), welche nicht unter die Definition einer der Komponenten a1- a4 fallen,
wobei die Angaben in Gew.-% jeweils auf alle Komponenten der isocyanatreaktiven Zusammensetzung A1) bezogen sind.

enthält.

10. Verfahren gemäß Anspruch 1-9, **dadurch gekennzeichnet, dass** die Komponente A1 die Komponenten

a1') 50 bis 95 Gew.-% mindestens einer Verbindung ausgewählt aus der Gruppe enthaltend Polyesterpolyolen und Polyetheresterpolyolen mit einer Hydroxylzahl im Bereich von 80 mg KOH/g bis 290 mg KOH/g, und weiterhin
a2') 5,0 - 15,0 Gew.-% wenigstens eines Polyols B2) mit einer Hydroxylzahl im Bereich von 150 - 300 mg KOH/g, hergestellt durch Alkoxylierung von Propylenglykol oder Ethylenglykol mit Ethylenoxid (EO) und/oder Propylenoxid (PO),
wobei die Angaben in Gew.-% jeweils auf alle Komponenten der isocyanatreaktiven Zusammensetzung A1) bezogen sind.
enthält.

11. Verfahren gemäß Anspruch 1-10, wobei die Isocyanatkomponente B ausgewählt ist aus polymeren MDI, monomerem MDI und / oder TDI.

12. PUR/PIR Hartschaumstoffe erhältlich nach einem Verfahren gemäß Ansprüchen 1 -11.

13. PUR/PIR Hartschaumstoffe gemäß Anspruch 12 mit einer Offenzelligkeit < 50 % (DIN EN ISO 4590 (August 2003)).

14. Verbundelemente und Blockschäume, hergestellt mit einem PUR/PIR Hartschaumstoff gemäß Anspruch 13.

15. Verwendung von Verbundelementen und Blockschäumen gemäß Anspruch 14 zur Herstellung von Dämmmaterialien.

EUROPÄISCHER RECHERCHENBERICHT

Nummer der Anmeldung

EP 24 18 0441

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 108 774 306 A (NANJING HBL NEW MAT CO LTD) 9. November 2018 (2018-11-09) * Absätze [0109], [0017], [0092]; Ansprüche 1,8 * ----- | 1-15 | INV. C08G18/40 C08G18/42 C08G18/76 |
| X | US 2023/303795 A1 (JONCHERAY THOMAS JULIEN [BE] ET AL) 28. September 2023 (2023-09-28) * Absätze [0020], [0024]; Anspruch 1; Beispiele 9,3,4,1 * ----- | 1-15 | |

RECHERCHIERTE SACHGEBIETE (IPC)

C08G
C08K

Der vorliegende Recherchenbericht wurde für alle Patentansprüche erstellt

| Recherchenort | Abschlußdatum der Recherche | Prüfer |
|---|---|---|
| München | 28. Oktober 2024 | Buestrich, Ralf |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**  EP 24 18 0441

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-10-2024

| Im Recherchenbericht angeführtes Patentdokument | Datum der Veröffentlichung | Mitglied(er) der Patentfamilie | Datum der Veröffentlichung |
|---|---|---|---|
| CN 108774306 A | 09-11-2018 | KEINE | |
| US 2023303795 A1 | 28-09-2023 | CA 3188804 A1 | 10-02-2022 |
| | | CN 116472300 A | 21-07-2023 |
| | | EP 4192895 A1 | 14-06-2023 |
| | | US 2023303795 A1 | 28-09-2023 |
| | | WO 2022028916 A1 | 10-02-2022 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2023143833 A1

- CN 108774306 A